Europäisches Patentamt

**European Patent Office**

Office européen des brevets

(19)

(11) Publication number: **0 030 426**
A2

# (12) EUROPEAN PATENT APPLICATION

(21) Application number: **80304201.9**

(22) Date of filing: **24.11.80**

(51) Int. Cl.³: **C 08 L 101/00,** C 08 L 9/02,
C 08 L 75/04, C 08 G 18/12,
C 08 G 18/69

(30) Priority: **11.12.79 GB 7942629**
**26.09.80 GB 8031258**

(43) Date of publication of application: **17.06.81**
**Bulletin 81/24**

(84) Designated Contracting States: **DE FR GB IT NL SE**

(71) Applicant: **DUNLOP LIMITED, Dunlop House Ryder
Street St. James's, London SW1Y 6PX (GB)**

(72) Inventor: **Clarke, Dennis Ivor, 57 Chestnut Drive,
Erdington Birmingham (GB)**

(74) Representative: **Waller, Roy Ernest Sykes et al, Group
Patent Department Dunlop Limited 2 Parade, Sutton
Coldfield West Midlands B72 1PF (GB)**

(54) Polymer compositions and methods of making products therewith.

(57)    The invention relates to polymer compositions suitable for use in coating applications or as adhesives. The compositions comprise at least two compatible, solidifiable, liquid oligomers and are spreadable at ambient temperature, do not involve conventional solvents and can attain a finite intermediate stage at which they are tacky and have cohesive strength. Typical examples of such compositions are (a) two different end group-tipped butadiene/acrylonitrile copolymers, and (b) two different types of isocyanate-terminated urethane prepolymers.

TITLE MODIFIED
see front page

Polymer Compositions

This invention relates to novel polymer compositions and to the use of these compositions for coating and bonding purposes.

Many coating and adhesive compositions are currently solvent-based and consequently at some stage during the coating or bonding process the solvent must be removed. Unfortunately, readily available solvents which are otherwise suitable for this purpose are often hazardous from the point of view of toxity and/or flammability. In attempts to overcome this problem, coating and adhesive compositions have been proposed based upon a liquid ingredient which can be applied to a substrate and then solidified, for example by cross-linking or polymerisation. Whilst this type of composition does have the advantage of avoiding the use of a conventional solvent it is often formulated to solidify very quickly in use in order to minimise assembly time and therefore has the disadvantage of only a transient intermediate stage at which the composition is tacky.

The present invention is intended to remedy these drawbacks by providing polymer compositions which are novel in themselves and useful as coating and adhesive compositions spreadable at ambient temperature (e.g. $20^{o}$C). When used as coating or adhesive compositions, the novel compositions render the use of conventional solvents unnecessary and have the added advantage of passing through a finite intermediate stage at which they are tacky, i.e. have "grab", and have some cohesive strength. It is even possible to formulate compositions within the scope of the present invention which have a greatly extended tacky stage e.g. of several weeks or more. A tacky, cohesive stage of practical duration is very desirable when bonding a variety of substrates e.g. rubber, wood, leather etc., because it allows positioning and if necessary, repositioning before the adhesive composition completely solidifies.

According to one aspect of the present invention, there is provided a fluid composition which comprises at least two compatible solidifiable, liquid oligomers as hereinafter defined.

According to a further aspect of the present invention there is provided a method of coating a substrate by applying a fluid composition which comprises at least two compatible, solidifiable, liquid oligomers as hereinafter defined and causing or allowing said fluid composition to solidify.

According to yet another aspect of the present invention a method of making a composite by bonding a first substrate to a second substrate comprises (i) applying to one or both substrates a fluid composition which comprises at least two compatible, solidifiable, liquid oligomers as hereinafter defined, (ii) allowing the composition or compositions to attain a coherent, tacky state, (iii) assembling the substrates with the composition or compositions at the interface and (iv) solidifying the composition or compositions to bond the assembly.

The solidifiable oligomers are those which are substantially chemically inert towards each other and which can solidify by curing substantially independently of each other and at a different rate. Thus one of the oligomers is solidified within the other liquid oligomer (1st stage cure) resulting in a coherent tacky, thickened composition which reaches its final solid form via curing of the other oligomer (2nd stage cure). By compatible is meant that the oligomers can be intimately mixed and will remain so during curing.

"Oligomers" are discussed by A.A. Berlin in "Polymer Science: USSR", Vol. 20 page 541 onwards. (Published by Pergamon Press Limited 1979) and are characterised as follows: Examination of the variation in the partial values of a number of physiochemical parameters, symbolised as $\wp$, with

- 3 -

change in the number of units in a chain molecule, n, reveals three clearly defined main regions: 1) where $(d \varphi /dn)$ = const, 2) $(d \varphi /dn)$ = const and 3) $(d \varphi /dn)$ = 0

The first region consists of low molecular substances, i.e. homologues containing in the region of 2 to 3 units, where the size of the molecule has not reached that of the statistical segment and the molecular chain is not flexible. The second region consists of oligomers - compounds with degrees of polymerisation of n = 2 to 100 i.e. substances whose molecules can include a few statistical segments and are characterised by partial values of parameters that are not averaged with respect to chain length. The third region contains high polymers i.e. compounds of $n = 10^3$ to $10^4$ and a multiplicity of statistically averaged conformational transitions.

Preferably the amount of each solidifiable oligomer is at least 5, more preferably from 10 to 80 and usually 20 to 50 parts by weight per 100 parts of the two oligomers. Solidification of one or both oligomers may occur spontaneously or may be caused by, or accelerated by, a change in conditions e.g. by the application of heat, moisture and/or radiation. Solidification is by curing and does not rely upon evaporation to any substantial extent. "Curing" is a common term in the art used to describe a process whereby a material is changed so as to be substantially insoluble. The term "curing" includes "cross-linking" and chain extension whereby a material undergoes a chemical change which is usually either irreversible or reversible with difficulty. Both oligomers consist essentially of a liquid oligomer substantially curable via end group functionality.

Examples of suitable combinations of compatible, solidifiable oligomers fall into two groups:
a)       Oligomers having the same polymeric backbone but different type of end group e.g. two different end group- terminated butadiene/acrylonitrile copolymers such as those available under the trade name Hycar from Goodrich Chemicals or two different types of isocyanate-terminated urethane prepolymer e.g. one based upon poly(tetrahydrofuran) and an isocyanate with one based upon a polyester and an isocyanate in which the isocyanate groups have been reacted with an acrylic monomer such as hydroxyethyl acrylate or an epoxide or silane.

b) Oligomers having a different polymeric backbone e.g. a tipped butadiene/acrylonitrile copolymer with an isocyanate-terminated urethane prepolymer. When a tipped liquid butadiene/ acrylonitrile copolymer is used examples of tipping groups include carboxyl, amine, vinyl, hydroxyl, mercapto and bromine. Preferably at least one of the oligomers will be elastomeric when solidified.

The oligomer composition may include at least one ingredient, either liquid or a finely dispersed solid, which will react with one of the liquid oligomers e.g. an epoxy resin based on a diphenol such as 2,2-di(4-hydroxy-phenyl) propane, an amine, and/or an organic isocyanate such as liquid M.D.I. (4,4-diphenyl methane diisocyanate). Such an ingredient may act specifically as a curing agent for one of the liquid oligomers and may be temporarily chemically "blocked" so that it will not become active until it becomes unstable by the action of e.g. heat, air, moisture, UV radiation etc. Alternatively, or in addition, at least one of the liquid oligomers may be chemically "blocked" so that its chemical activity is retarded e.g. a urethane prepolymer blocked with methyl ethyl ketoxime available as Adiprene BL-16 from Du Pont. Where more than one curative is included chemical interaction which affects their specific cure function must not occur. Second stage curatives may be applied by methods known in the art to the surface of the coating after the first stage cure has occurred.

Other additives which can be included in the oligomer

- 5 -

composition may be selected from a tackifier, an antioxidant or other type of stabiliser, a reinforcing filler (e.g. carbon black, silane-treated silica, a metal carbonate or silicate, glass or textile fibres), a non-reinforcing filler (e.g. talc or titanium oxide), and a colourant (e.g. a metal oxide, a metal sulphide or an organic pigment). Absorbable plasticisers or reactive liquids may be included as diluents e.g. acrylic monomers or low molecular weight epoxy resins.

If desired an oligomer composition according to the present invention may be applied to a surface (e.g. a release paper), allowed to or caused to thicken to a tacky state and then removed from the surface to be completely solidified at a later stage. In this way a "portable" adhesive can be made e.g. the tacky film can be applied to a first substrate and then assembled with a second substrate so that a bonded composite will result upon final cure of the film.

Examples of substrates which may be coated or bonded according to the present invention include those of elastomers, plastics, wood, leather, paper, textiles or metals. The method of bonding can be used to bond (i) portions of a substrate to each other, (ii) substrates of different compositions or (iii) substrates of the same composition.

The invention is illustrated by way of various oligomer/oligomer combinations in the following Examples in which all parts are by weight.

| EXAMPLE I | Parts |
|---|---|
| Urethane prepolymer in which isocyanate groups have been reacted with an acrylic monomer (available as Uvithane 783 from Thiokol) | 30 |

0030426

- 6 -

| EXAMPLE I - cont'd | Parts |
|---|---|
| Urethane prepolymer of polytetrahydrofuran and 2,4-toluene diisocyanate (available as Adiprene L100 from Du Pont | 70 |
| Benzophenone | 1.0 |
| N-methylmorpholine | 1.0 |

The very viscous Uvithane 783 was thoroughly mixed with the more fluid Adiprene L100 (nominal isocyanate content = 4.2%, viscosity at $25^{\circ}C$ = 250 poise) by gently warming them and hand-stirring them together. The benzophenone UV initiator was dissolved in the liquid tertiary amine and added to the mixture which was kept in a sealed container. A portion of the freshly-prepared formulation was spread onto a flat poly(tetrafluoroethylene) (Teflon) coated metal sheet to form a film of approximately 0.5 mm in thickness. The film was placed under a Hanovia health lamp of 250 watt, at approximately 10 cm from the lamp, and subjected to UV radiation for 5 minutes. The film became tacky and rubbery and although very weak could be removed from the support sheet and carefully handled. The film was left to stand exposed to air at room temperature for two days in which time it transformed into a reasonably strong, flexible, rubbery material.

Further portions of the freshly prepared mixture were spread evenly onto two 1 inch x 1 inch sheets cut from Formica, plywood, and two pieces of flat, buffed cured Neoprene tank-lining material and left several minutes to level out. Each coating was then exposed to the UV treatment as before. The appropriate pieces were then firmly pressed together using a hand-pressure roller and left at ambient temperature for four days. After this time it was found that the Neoprene tank-linings had bonded together and that the Formica had adhered to the plywood.

| EXAMPLE II | Parts |
|---|---|
| Uvithane 783 (Thiokol) | 30 |
| Adiprene L100 (du Pont) | 70 |

- 7 -

| EXAMPLE II - cont'd | Parts |
|---|---|
| Benzophenone | 1.0 |
| N-methyl morpholine | 1.0 |
| Caytur 21 available from Du Pont (Diamine-salt complex dispersed in plasticizer) | 14 |

The formulation was blended as in the previous Example and a portion spread onto a Teflon-coated metal plate to give a thin film which was placed under the bench UV lamp for 5 minutes. A weakly coherent sheet was obtained which had slight surface tackiness and could just be removed from the plate with care. The metal plate supporting the film was then placed on a surface heated to approximately 150°C. The sheet cured rapidly within a few minutes to give a reasonably strong flexible material.

A further portion of the mix was coated evenly onto two 2 inch x 4 inch sheets of buffed cross-linked Neoprene tank-lining material to give a smooth thin coating. These surfaces were given 3 minutes UV exposure and were then placed in contact together and consolidated by means of a hand roller. This assembly could be handled without the sheets separating easily. The assembly was then pressed at 130°C for 8 minutes under 1 $MN/m^2$ pressure and released while hot. A good bond was obtained with the tank-lining material.

EXAMPLE III

| Part A | Parts |
|---|---|
| Adiprene L167 available from Du Pont (urethane prepolymer of poly-tetrahydrofuran and 2,4 toluene diisocyanate, viscosity = 75 poise at 24°C, nominal isocyanate content = 5.1%) | 100 |

| Part B | |
|---|---|
| Adiprene BL-16 available from Du Pont (urethane prepolymer in which isocyanate groups are blocked with methyl ethyl ketoxime, viscosity = approximately 2000 poise at 25°C, nominal un-blocked isocyanate content = 5.3%) | 100 |

- 8 -

| EXAMPLE III - cont'd | Parts |
|---|---|
| Caytur 21 (Du Pont) | 25 |

The mixture of Parts A and B were spread as a 0.5 mm thin film onto Teflon-coated metal sheet and left to stand at ambient temperature for 2 days to cure by moisture diffusion. After this time the film was coherent, elastic and strong enough to be easily removed from the plate. The film was substantially free of air bubbles and had excellent tack and cohesive strength which remained for many days. After 3 days a portion of the film was placed in an air-oven and cured for 2 hours at 142$^{\circ}$C. The cured film was tack-free, elastic and fairly strong although it had discoloured brown. Gas bubbles occurred in films of thicker sections. Part B of the formulation alone was also cast and cured in the air-oven at 142$^{\circ}$C for 2 hours. Thin films cured but thicker films did not and developed gas bubbles on the underside.

A further portion of the tacky film was left to stand for 1 week after casting, and placed between two pieces of clean, sanded (porous) plywood strips under light pressure. The film held the pieces together sufficiently to allow handling. This combination was clamped together by means of a screw "G" clamp and placed in an air oven at 142$^{\circ}$C for 1$\frac{1}{2}$ hours. The wood pieces were firmly bonded together.

## EXAMPLE IV

| | Parts |
|---|---|
| **Part A** | |
| Adiprene L100 (Du Pont) | 100 |
| Caytur 21 | 25 |
| **Part B** | |
| Adiprene BL-16 | 100 |
| DD 1443 (a liquid diamine supplied by Bayer) | 8 |

Parts A and B were thoroughly mixed together and the mixture spread onto a poly(tetrafluoroethylene) (Teflon)-coated metal plate using a serrated adhesive applicator. The mixture levelled out to form a film of approximately 0.5 mm thickness. The pot life of the mixture was approximately 0.5 hour. After 4 hours at room temperature the film had become coherent and was very tacky. The film was left overnight and then removed from the Teflon plate and placed onto a poly(ethylene terephthalate) film (Melinex) and covered with polythene sheet. The film was coherent and although fairly weak, was rubbery with a very low modulus and had excellent tack to itself. This state remained for several weeks. A portion of the film was cured in an oven at $140^{\circ}C$ for $1\frac{1}{2}$ hours. This treatment transformed it into a tough, tack-free film.

A portion of the freshly prepared mixture was also spread uniformly onto the clean sanded surfaces of a piece of wood and Formica. The treated surfaces were left to stand for 4 hours and the two tacky surfaces were then pressed together. The assembly, which was capable of holding itself together, was clamped in a "G" clamp and placed in an air oven at $140^{\circ}C$ for $1\frac{1}{2}$ hours. The laminate was well bonded after this time.

<div align="center">EXAMPLE V (Ref 29)</div>

Adiprene L100 (Du Pont) urethane prepolymer was reacted with 1.01 equivalents of hydroxy ethyl methacrylate monomer at $40^{\circ}C$ by stirring the materials together with a trace of stannous octoate catalyst under anhydrous conditions until a homogeneous mixture was obtained. The mixture was then left to stand overnight. The reaction product was a colourless fluid of approximately several hundred poise viscosity at room temperature. Analysis showed that all the isocyanate groups had been fully reacted. This material was used to prepare Part B of the adhesive.

| | Parts |
|---|---|
| Part A | |
| Adiprene L100 (Du Pont) | 49.5 |
| Tertiary butyl perbenzoate | 0.5 |

| Part B | Parts |
|---|---|
| Acrylate-modified Adiprene L100 | 47 |
| DD 1443 diamine curative (Bayer) | 3 |

Part A was mixed under anhydrous conditions. Both the parts were stored separately in dry, air-tight containers overnight and then equal parts were thoroughly mixed together by hand just prior to use. Each part was stable on storage for at least 3 months. One portion of the adhesive mixture was spread onto the dust-free buffed surface of a sheet of a cross-linked Neoprene-coated fabric material used in the manufacture of fuel tanks. A hacksaw blade of 32 teeth/inch, held in a suitable holder, was used to uniformly apply approximately 100 g/m$^2$ of the mixture, using the blade to work the mixture into the buffed surface. The mixture remained workable for approximately 20 minutes. A thin film of polythene was then placed on the adhesive coating and a smooth hand-roller was used to flatten the coating against the polythene and work out the majority of the entrapped air. One-inch width strips were cut from this protected combination and left at ambient temperature for a period of between 2 - 6 hours. The polythene was then cleanly removed from the adhesive layer which was smooth and coherent but very tacky. Pairs of the treated strips were positioned together with the adhesive coated surfaces in contact, and a light consolidating pressure was applied using a hand-held roller. The strips were sufficiently well held together at this stage to allow careful handling. The adhesive surfaces of certain of the strips were prewarmed to 80°C before contact was made. After 4 days standing at ambient temperature it was found that the materials were firmly bonded together. The peel-down resistance of the bonded strips was measured at 5 inches/min and the results are given in the Table.

| Lamination technique | Peel-down adhesion N/inch after 4 days | | |
|---|---|---|---|
| | Period at room temperature before contacting surfaces | | |
| | 2 hours | 4 hours | 6 hours |
| Rolled together at room temperature | $60^{(1)}$ | $10 - 20^{(2)}$ | $20^{(2)}$ |
| Rolled together at $80^{o}C$ | - | $80^{(1)}$ | $80^{(1)}$ |

(1)  Tearing of buffed Neoprene substrate

(2)  Failure between the two contacted adhesive layers.

A further portion of the adhesive mixture was applied in the same manner as before to the clean sanded surfaces of 2 inch strips of planed soft-wood and to the back surface of a 2 inch strip of Formica. The treated surfaces were covered with polythene as before and this was removed after 2 hours. The treated surfaces of the wood strips were positioned together and firmly clamped in a vice for a few minutes to consolidate the joint. The Formica was attached to the wood surface in the same manner. At this stage the composites were sufficiently well held to be carefully handled. After a period of 4 days the composites were found to be firmly bonded together.

(Ref 35f)  A portion of the adhesive was also spread onto a flat sheet of split side-leather using a spatula. Sufficient quantity was applied to fill the leather surface and provide a smooth adhesive layer when flattened against polythene film. The polythene film was removed from the adhesive surface after 1.5 hours by which time the adhesive had become coherent and tacky. Two layers were pressed together and left for several days to cure at ambient

- 12 -

temperature. The leather became well bonded together after
this time.

### EXAMPLE VI (Ref 56)

| Part A | Parts |
|---|---|
| Adiprene L100 | 49.5 |
| Tert. butyl perbenzoate | 0.5 |
| Part B | |
| Acrylic-modified Adiprene L100 | 35 |
| Trimethylol propane triacrylate | 12 |
| DD 1443 (aromatic diamine curative) | 3 |

The adhesive mixture was prepared and well mixed together.
Each part was stable in the absence of moisture for at least
3 days. The mixture was usable for approximately 10 minutes
and of sufficiently low viscosity to be self-levelling when
applied as a thin coating.

A portion of the adhesive mixture was applied to strips of
the buffed cross-linked Neoprene tank-lining material by
means of the serrated applicator and left to stand at room
temperature for the periods of time given in the Table below.
Two halves of each strip were contacted together and the
firmly held laminates placed on a metal plate heated to $80^{o}$C.
A smooth hand-roller was used to consolidate the laminates as
they became heated through. There was sufficient slippage of
the joint while warm to allow for any adjustment of positioning
required. The laminates were cooled and allowed to stand for
4 days before attempting to peel them apart.

| Interval before laminating (mins) | 15 | 30 | 60 | 120 |
|---|---|---|---|---|
| Amount of slippage while warm | →——decreasing →—— | | | |
| Bond to Neoprene after 4 days at room temperature | good | good | patchy | poor |

### EXAMPLE VII (Ref 45)

Adiprene L100 urethane prepolymer was reacted with 1.01
equivalents of gamma-mercaptopropyl trimethoxysilane at $40^{o}$C
by stirring the materials together with 0.1% of triethylene diamine catalyst (Dabco, Houdry Process Corporation) under anhydrous conditions until a homogeneous mixture was obtained. Analysis of the mixture after an overnight stand showed that full reaction of the isocyanate group had occurred by this time. The following parts were prepared using this material.

|  | Parts |
|---|---|
| Part A | |
| Adiprene L100 (Du Pont) | 43 |
| Part B | |
| Silane-modified Adiprene L100 | 50 |
| DD 1443 (diamine curative) | 3 |

Equal amounts of the two parts were thoroughly mixed together to give an adhesive system which remained spreadable for about 30 minutes. A portion of this was evenly spread onto a smooth, flat sanded surface of two strips of softwood using the serrated hacksaw blade applicator. Polythene film was rolled onto this and the assemblies left to stand at ambient temperature. A further portion of the adhesive mixture was used to coat two glass microscope slides in the same manner. After 2 hours the polythene was removed from the materials to expose the adhesive which had formed a coherent and tacky coating. The two treated wood and the two treated glass surfaces were lightly pressed together and left to stand for 6 days. Both the wood and glass laminates had become firmly bonded after this time.

EXAMPLE VIII (Ref 53C)

The following adhesive system was prepared from the epoxy-modified Adiprene L100 described in Example Ref. 44C.

|  | Parts |
|---|---|
| Part A | |
| Adiprene L100 | 55 |
| Part B | |
| Epoxy-modified Adiprene L100 | 30 |
| Epicote 815 (Shell Chemicals) a diglycidyl ether of Bisphenol A | 20 |
| Epikure $BF_3$400 (Shell Chemicals) a latent catalyst comprising the salt of $BF_3$ and mono-ethylamine | 1.5 |

| | Parts |
|---|---|
| DD 1443 aromatic diamine curative (Bayer) | 3.5 |

The Epikure BF$_3$400 was first dissolved in the Epicote 815 by warming the two together below 100°C. Part B had a stable pot life of only a few days. Equal amounts of the freshly prepared adhesive parts were well mixed together and evenly spread onto buffed Neoprene tank fabric by means of the serrated applicator and covered with polythene sheet. The mixture remained spreadable for about 15 minutes. After 1 hour at ambient temperature the polythene film was cleanly removed from the adhesive which had formed a coherent but tacky state by this time. When left protected by the polythene this tacky state remained useable for at least one day. Two halves of the standard Neoprene fabric were contacted together one hour after spreading and pressed at 130°C for 10 minutes using a light moulding pressure. The laminate was removed hot and when cool was found to be firmly bonded together. A sheet of the adhesive was also left to stand for 1 hour and then cured at 130°C for 10 minutes. A fairly strong flexible material was obtained.

### EXAMPLE IX (Ref 58B)

The adhesive was prepared by thoroughly stirring the following ingredients together in the following order:

| | Parts |
|---|---|
| Adiprene L100 (Du Pont) | 250 |
| Epicote 815 ) | 100 |
| Bisphenol A ) prereacted together at 95°C | 24 |
| Hycar CTBN (1300 x 13) a carboxyl terminated liquid butadiene/acrylonitrile copolymer from B.F. Goodrich | 124 |
| DMP 30, Tri-dimethyl amino methyl phenol (Rohm & Haas) | 7.4 |
| DD 1443, aromatic diamine curative | 10 |

The freshly prepared adhesive was spread onto the buffed surface of the Neoprene coated fabric by means of the serrated applicator. The remainder was cast between two layers of polythene to give a film of approximately 1 mm. The mixture was spreadable for about 15 minutes. After 1 hour at ambient temperature the polythene was cleanly removed from the adhesive which had become coherent and very tacky. The coated Neoprene was cut into two and the two treated surfaces placed together. This was left for 1 hour and then moulded at low pressure at 130$^{o}$C for 10 minutes and released hot. When cool the laminate was found to be firmly bonded together. The cast film remained tacky for at least 3 days. When cured at 130$^{o}$C for 10 minutes the film converted to a non-tacky strong rubber-like material.

### EXAMPLE X (Ref 33)

The acrylate-modified Adiprene L100, prepared as described in the previous Examples, was used to prepare the following one-can mixtures which were mixed in air and then stored under dry conditions in the absence of light. The benzophenone was pre-dissolved in the tertiary amine before addition to the mix. The mixtures (b) and (c) were stable on storage for at least 2 months.

A portion of each of the viscous liquid mixtures given in the Table below was evenly spread onto the surface of 2 x 3 inch strips of clean, sanded, planned softwood, using the serrated applicator. Each coating was covered with transparent plastic cover-film and a smooth hand-roller was used to flatten the adhesive and work out the majority of entrapped air. The treated surfaces were then exposed to UV radiation for 2 minutes by placing them under a 250 watt Hanovia health lamp at approximately 10 cm from the lamp. The cover-film was then removed from each surface when cool. At this stage the control mix (a) was still a fluid liquid and the polythene could not be removed without disrupting the liquid coating. (This state remained the same even after a further 8 minutes irradiation). The other systems however, were found to have gelled after 2 minutes exposure so that the cover film could be removed to leave smooth very tacky surfaces. Two of the wood strips both coated with each mix were lightly pressed together.  The 'grab' between the
surfaces and the ability of the two strips to be moved sideways
to the joint were noted.

All the  joints were then left in a horizontal position free
from stress to cure at ambient temperature.  All the adhesives
finally cured to tough elastic materials and the joints
became firmly bonded.

| Mix | (a) | (b) | (c) | (d) |
|---|---|---|---|---|
| **Formulation (parts)** | | | | |
| Acrylate-modified Adiprene L100 | 0 | 10 | 20 | 20 |
| Adiprene L100 (Du Pont) | 100 | 90 | 80 | 80 |
| Benzoin n-butyl ether | 3 | 3 | 3 | – |
| Benzophenone | – | – | – | 0.5 |
| 2-dimethylamino ethyl benzoate | – | – | – | 2.5 |
| | | | | |
| Cover film used | ←— Polythene (0.1 mm) ——→ | | | Melinex (0.05 mm) |
| Pot life of mix | ←— at least several days ——→ | | | hours |
| | | | | |
| **Details of joint formed** | | | | |
| Adhesive "grab" | none | very good | good | very good |
| Joint "slip" | extreme | some | slight | none |
| Cure time (a) Tack-free time (hrs) | 48 | 48 | 48 | 2 |
| (b) Full cure (days) | 5 | 5 | 5 | within one |
| Final bond strength | | all very good | | |

A further wood strip coated with mix (b) was also pressed against a second untreated clean sanded wood surface and the laminate clamped in a vice for a few minutes. This joint showed good 'grab' and did not slip in position as much as the first combination.

Two-inch square strips of the buffed Neoprene tank-linking fabric used in the previous examples were treated as above with mixtures (b) and (c). The coated surfaces were applied together after the UV treatment and removal of the polythene, using a smooth hand-roller to apply pressure. These combinations were then left undisturbed at ambient temperature for one week. The strips were found to be strongly bonded together after this time, with adhesion failure causing tearing of the rubber surface. The laminate of mix (b) was more uniformly bonded than that of mix (c) where the uniformity of adhesion was somewhat patchy.

EXAMPLE XI (Ref 44a)

The following ingredients were well mixed together using the modified Adiprene L100 materials described previously.

|  | Parts |
|---|---|
| Acrylate-modified Adiprene L100 | 30 |
| Benzoin n-butyl ether | 3 |
| Epoxy-modified Adiprene L100 | 70 |
| Triethylene tetramine | 3,5 |

The freshly prepared mix was evenly spread onto a sheet of buffed Neoprene tank-linking fabric by means of the hacksaw blade applicator used in Example VII. The mixture had a workable life of 3 hours. A layer of the transparent polythene film was applied and a hand-roller used to flatten the adhesive and remove any entrapped air. The assembly was given the 2 minute UV exposure under the UV lamp as previously described. The polythene film was then cleanly removed to expose a smooth coherent and tacky adhesive surface. Two of these surfaces were then placed together using a hand-roller to apply light pressure. After

- 19 -

standing overnight at ambient temperature the adhesive was found to have cured and firmly bonded the material together.

<u>EXAMPLE XII</u> (Ref 31)

The acrylate-modified Adiprene L100 prepared as described in the last Example was used to prepare the following mixture which was a fairly viscous fluid stable for at least several months when prepared and stored away from light under dry conditions.

|  | Parts |
|---|---|
| Acrylate-modified Adiprene L100 | 30 |
| Adiprene L100 (Du Pont) | 70 |
| Benzoin n-butyl ether | 3.0 |
| Caytur 21, a diamine-salt complex dispersed in plasticizer (Du Pont) | 13.0 |

A portion of the mixture was spread onto the dust-free buffed or sanded surfaces of (a) two 1 inch strips of a sheet of Neoprene-coated fabric material used in the manufacture of fuel tanks, (b) a 2 x 4 inch strip of planed softwood, (c) the back surface of a 2 x 4 inch strip of Formica. A hacksaw blade of 32 teeth/inch held in a suitable holder was used to uniformly apply approximately 100 g/m$^2$ of the mixture onto the surfaces. The blade was used to work the mixture into the surface of the buffed rubber sample. A film of 0.1 mm transparent polythene was placed on each coating and a smooth hand-roller was used to flatten the adhesive between the polythene and work out the majority of the entrapped air. The protected coatings were exposed to UV irradiation either by placing them 10 cm below a Hanovia health lamp of 250 watts for 2 minutes or by leaving them in direct winter sunlight for at least 0.5 hour. This UV irradiation period caused the adhesive to gel so that the polythene coating could be cleanly and easily removed. The adhesive at this stage was coherent but tacky with a smooth surface. The appropriate adhesive-coated surfaces were contacted together using a hand-roller to consolidate the bond. A Morphy-Richards steam

iron was set to the "dry-steam" position and used to hand press the laminates together for 2 minutes. The surface temperature of the iron was approximately 140°C. The iron was then removed and the laminates cooled. The Neoprene-coated fabric was found to be well bonded together over most of its area so that separation caused tearing of the rubber surface. The Formica was firmly bonded to the wood.

To illustrate the effect of UV light on the adhesive formulation, a further strip of wood was coated as before and half the surface was covered with transparent polythene, and half with black pigmented polythene. The strip was left in direct sunlight for 2 hours. The adhesive under the transparent polythene had gelled by this time and the polythene could be cleanly removed. The adhesive under the black polythene remained fluid and the polythene could not be removed cleanly. After standing indoors for a further 24 hours the states of the adhesive were the same.

A sheet of split side leather was coated on one side with a portion of the adhesive. Sufficient quantity was applied to fill the leather surface and give an air-free layer beneath a transparent Melinex film which was rolled onto the adhesive. The assembly was exposed to direct sunlight for 10 minutes and the Melinex was cleanly removed to leave a smooth coherent tacky surface. The sheet was cut into two and the treated surfaces were pressed together for 2 minutes using a hand-held iron set to give a surface temperature of approximately 140°C. The leather laminate was found to be firmly bonded together when cooled.

A further portion of the adhesive was uniformly coated onto a urethane spread-coated fabric used in the fabrication of flexible containers. The serrated hacksaw blade applicator described previously was used to meter the quantity of adhesive and also to mechanically work the adhesive into the polyurethane surface using a sideways abrading action.
A film of transparent Melinex was used to cover this surface
and entrapped air was eliminated by means of a smooth hand-
roller. The assembly was exposed to direct sunlight for 10
minutes and the Melinex was cleanly removed to expose a
smooth coherent tacky surface. Two coated surfaces were
placed together and the laminate pressed at 130°C for 3
minutes in a low pressure hand press. The laminate was
released hot and when cool was found to be well bonded
together.

Yet another portion of the adhesive was uniformly coated
onto a 0.3 mm thick sheet of flexible polyvinyl chloride
as in the previous paragraph. The coating covered with
Melinex was exposed to the UV lamp for a period of 2 minutes.
Two of the tacky coated surfaces were positioned together and
the combination was placed in a low pressure press at 130°C
together with a cured rubber sheet to distribute the pressure.
The sample was removed after 10 minutes while still hot and
was found to be strongly bonded together when cool. No
significant flow of the PVC had occurred under these conditions.

EXAMPLE XIII (Ref 44C)

Adiprene L100 urethane prepolymer was reacted with 1.01
equivalents of glycidol at 40°C by stirring the materials
together with a trace of stannous octoate catalyst under
anhydrous conditions until a homogeneous mixture was obtained.
This was left to stand overnight. Analysis of the mixture
showed that full reaction of the isocyanate group had occurred
by this time. This material together with the acrylic-modified
Adiprene L100 described previously were used in the following
formulation.

|  | Parts |
| --- | --- |
| Part A |  |
| Acrylic-modified Adiprene L100 | 50 |
| Benzophenone | 1.25 |
| Triethylene tetramine | 3.0 |

- 22 -

| Part B | Parts |
| --- | --- |
| Epoxy-modified Adiprene L100 | 40 |
| Epicote 815 (Shell Chemicals) diglycidol ether of Bisphenol A | 11.5 |
| Bisphenol A (2,2' bis(4-hydroxyphenol) propane) | 2.75 |

The benzophenone was dissolved in the triethylene tetramine prior to addition with the rest of Part A. The Epicote 815 was prereacted with the Bisphenol A by warming them together at 90°C until dissolved.

The two component parts were stable for at least several weeks when stored in the dark.

Equal amounts of the freshly prepared adhesive formulation were thoroughly mixed together and spread as an even coating onto the surface of buffed Neoprene tank fabric material using the hacksaw blade applicator and then covered with transparent polythene film as in the previous Examples.

The assembly was then immediately exposed as before to the UV lamp irradiation for 2 minutes. The polythene was cleanly removed from the adhesive layer which had formed a coherent but tacky coating. Two halves of the sample were immediately positioned together and press cured at 120°C for 10 minutes under light pressure.

The laminate was removed hot from the press and allowed to cool at which time it was well bonded together.

## EXAMPLE XIV

This Example describes a storable heat-activated tacky flexible adhesive system.

The epoxy-modified Adiprene L100 of Example XIII was used to prepare the mixes given in the following Table. Formulations (a) and (c) contained no epoxy curative and were for control purposes only. Each freshly prepared mix was uniformly spread onto strips of the buffed Neoprene-coated fabric as used previously, by means of the serrated applicator. Polyethylene film was used to cover each surface. The samples were left to stand at ambient temperature until the polythene film could be cleanly removed from the coating. A fast separation rate was found to be preferable. The self-tack of each coating was noted at this time and two coated strips were moulded together under low pressure at 150°C for 10 minutes. The remainder of the samples were left for a period of 1 month and the procedure was repeated. The results are given in the Table.

## EXAMPLE XIV

|  | (a) | (b) | (c) | (d) |
|---|---|---|---|---|
|  | ref 77 | ref 83 | ref 73 | ref 74 a |
| Adiprene L100 | 22 | 22 | 30 | 30 |
| Epoxy modified Adiprene L100 | 55 | 55 | 50 | 50 |
| DD 1443 curative | 1.77 | 1.77 | 2.4 | 2.4 |
| Epicote 815 (Shell) | 21.5 | 20 | 20 | 18.5 |
| Epikure $BF_3$400 (Shell) | - | 1.5 | - | 1.5 |
| Time to remove PE at RT | 2 days | 2 days | 5 hr | 5 hr |
| – tack state |  | all very tacky | | |
| – bond to Neoprene | no bond | good | no bond | good |

|                      | (a)          | (b)           | (c)          | (d)           |
| -------------------- | ------------ | ------------- | ------------ | ------------- |
|                      | ref 77       | ref 83        | ref 73       | ref 74 a      |
| After 1 month at RT  |              |               |              |               |
| - tack state         | very tacky   | good tack     | good tack    | good tack     |
| - bond to Neoprene   | -            | fairly good   | -            | very good     |

EXAMPLE XV  (Ref 54)

This Example describes a storage stable tacky flexible adhesive capable of being subsequently cured by UV light exposure. The acrylate-modified Adiprene L100 of Example V was used in the formulation:

|                                   | pbw |
| --------------------------------- | --- |
| Acrylate-modified Adiprene L100   | 70  |
| Adiprene L100                     | 30  |
| Benzoin n-butyl ether             | 3   |
| DD 1443 curative                  | 2.4 |

The freshly prepared mix was spread as a thin film onto black polyethylene film. A 0.5 cm thick sheet of coarse reticulated polyurethane foam was pressed against this immediately and the combination was left to stand at room temperature for several days without exposure to light. The adhesive film developed a self-tacky state which remained for at least 5 months. After several weeks the film adhesive side of two pieces of the treated foam were contacted rogether and exposed to sunlight for approximately 15 minutes. The foam layers became bonded together.

EXAMPLE XVI  (Ref 95)

The Poly BDCN-15 used in the formulation below was a hydroxyl-tipped poly(butadiene/acrylonitrile) liquid rubber supplied by Arco. This had a viscosity of 500 poise at 25 C with a hydroxyl functionality of 2.6 - 2.8 and a hydroxyl content

- 25 -

of 0.60 m equiv/g.  The Suprasec DND curative was added to
the mixture last.

|  | pbw |
|---|---|
| Poly BD CN-15 | 30 |
| Hycar CTBN (1300 x 13) | 31 |
| Epicote 815 ⎫ prereacted at 95°C | 25 |
| Bisphenol A ⎭ | 6 |
| DMP-30 catalyst (Rohnm & Haas) | 1.85 |
| Suprasec DND (an impure liquid form of 4,4'-diphenylmethane diisocyanate from ICI) | 7.5 |

A portion of the freshly prepared mix was spread onto
strips of degreased aluminium metal and a polyethylene cover
film was applied as previously.  After 2 hours at ambient
temperature, the cover film was removed and two of the tacky
surfaces were contacted together to fix the aluminium metal
in the required position.  The laminate was pressed at
140°C for 20 minutes under light pressure to complete the
cure of the adhesive.  The strips were found to be firmly
bonded together when cool.

### EXAMPLE XVII   (Ref 93)

The silane-modified Adiprene L100 of Example VII and the
acrylate modified Adiprene L100 of Example V were used in
the following formulation.

|  | pbw |
|---|---|
| Acrylate modified Adiprene L100 | 30 |
| Benzophenone | 1.34 |
| 2-dimethylamine ethyl benzoate | 1.66 |
| Silane-modified Adiprene L100 | 70 |

A portion of the freshly prepared mix was spread by means of
the serrated applicator onto strips of clean glass and
planed wood.  Polyethylene cover film was applied and the
samples were placed under the UV lamp (used previously)
for 2 minutes.  After standing for 1 hour at ambient

0030426

- 26 -

temperature, the polyethylene was removed from the tacky
coatings.  Appropriate surfaces were contacted together and
left undisturbed for one week at ambient temperatures.
Firmly bonded combinations of glass and wood were obtained.

EXAMPLE XVIII  (Ref 99)

The acrylate-modified Adiprene L100 described in Example V
was used to prepare the following mix with an amine-tipped
liquid poly(butadiene/acrylonitrile) rubber of 1000 poise
viscosity at $25^{o}$C available from BF Goodrich as Hycar ATBN.

|  | pbw |
|---|---|
| Acrylate-modified Adiprene L100 | 30 |
| Hycar ATBN | 40 |
| Epicote 815 ) prereacted at $95^{o}$C | 24.2 |
| Bisphenol A ) | 5.8 |
| Benzoin n-butyl ether | 3 |

A portion of the freshly prepared adhesive mixture was
applied by means of the serrated applicator onto strips of
degreased aluminium.  Each strip was exposed to UV light
for 30 seconds  using the UV lamp previously described.  The
tacky surfaces were contacted together and left to stand at
ambient temperature overnight.  The strips were pressed
together at $100^{o}$C for 20 minutes and when cool were found
to be bonded together.

EXAMPLE XIX  (Ref 88)

The following mix was prepared using a vinyl terminated
poly(butadiene/acrylonitrile) liquid rubber supplied by
BF Goodrich as Hycar VTBNX (1300 x 23).

|  | pbw |
|---|---|
| Hycar VTBNX (1300 x 23) | 30 |
| Hycar CTBN | 24.8 |
| Epicote 815 ) prereacted at $95^{o}$C | 20 |
| Bisphenol A ) | 4.8 |

|  | pbw |
|---|---|
| DMP 30 catalyst | 1.48 |
| Benzoin n-butyl ether | 3 |

A portion of the freshly prepared adhesive was spread by means of the serrated applicator onto strips of degreased aluminium and covered with clear polyethylene film. These were given 2 minutes exposure to UV by means of the previously described lamp. The cover film was then removed and the tacky coated sides of the strips were positioned together. The laminate was pressed under low pressure for 20 minutes at 140°C to bond the aluminium together.

### EXAMPLE XX   (Ref 96)

The acrylate-modified Adiprene L100 of Example V was used to prepare the mix below:

|  | pbw |
|---|---|
| Acrylate-modified Adiprene L100 | 30 |
| Hycar CTBN | 24.8 |
| Epicote 815 } prereacted at 95°C | 20 |
| Bisphenol A } | 4.8 |
| DMP 30 catalyst | 1.48 |
| Benzoin n-butyl ether | 3 |

A portion of the freshly prepared adhesive was spread by means of the serrated applicator onto strips of degreased aluminium. These were given a 30 second exposure to UV light using the previously described lamp. The tacky coated sides of the strips were positioned together and pressed at 140°C for 20 minutes under low pressure. The aluminium was weakly bonded together.

CLAIMS:

1.     A fluid composition characterised in that it comprises at least two compatible solidifiable liquid oligomers as hereinbefore defined.

2.     A composition according to Claim 1 characterised in that at least one of the oligomers will be elastomeric when solidified.

3.     A composition according to Claim 1 or 2 characterised in that the composition includes a cross-linking agent for one of the oligomers.

4.     A composition according to Claim 1, 2 or 3 characterised in that the oligomers comprises two different end group-terminated butadiene/acrylonitrile copolymers.

5.     A composition according to Claim 1, 2 or 3 characterised in that the oligomers comprise two different types of isocyanate-terminated urethane prepolymers.

6.     A composition according to any preceding claim characterised in that the amount of each oligomer is in the range 20 to 50 parts by weight per 100 parts of the oligomers.

7.     A method of coating a substrate characterised in that it comprises applying to the substrate a fluid composition according to any preceding claim and then causing or allowing the fluid composition to solidify.

8.     A method of making a composite by bonding a first substrate to a second substrate characterised in that it comprises (i) applying to one or more substrates a fluid composition according to any one of Claims 1 to 6 (ii) allowing the composition or compositions to attain a coherent, tacky state, (iii) assembling the substrates with the composition or compositions at the interface, and (iv) solidifying the composition or compositions to bond the assembly.

9. A method of forming adhesive film characterised in that it comprises preparing the fluid composition according to any one of Claims 1 to 6 and allowing it to attain a coherent tacky state.